# EUROPEAN PATENT APPLICATION

(11) **EP 4 836 083 A1**
(43) Date of publication of application: **04.11.2026**
(21) Application number: 24910709.5
(22) Date of filing: 10.12.2024
(51) Int. Cl.: H01M 10/613

(54) **BATTERY PACK THERMAL MANAGEMENT DEVICE, BATTERY PACK, AND VEHICLE**

(30) Priority: 29.12.2023 CN 202311872799
(71) Applicant: Wuhan Lotus Cars Co., Ltd., Wuhan, Hubei 430056 (CN)
(72) Inventor: YU, Fucheng, Wuhan, Hubei 430056 (CN); YANG, Lei, Wuhan, Hubei 430056 (CN)
(74) Representative: Boult Wade Tennant LLP
(86) International application number: PCT/CN2024/138280
(87) International publication number: WO 2025/139778

(57) **Abstract**

The present application provides a battery pack thermal management device, a battery pack, and a vehicle, relating to the technical field of batteries. The battery pack thermal management device includes a housing including at least two thermal management plates and a frame; where one of at least two thermal management plate is located above the frame and connected to the frame, and the other is located below the frame and connected to the frame. An accommodating cavity is enclosed by the inner wall of the frame and the thermal management plates located at two ends of the frame and configured to accommodate a battery cell, and the thermal management plates located at two ends of the frame are attached to two ends of the battery cell respectively. Each thermal management plate is provided with a flow channel internally, cooling or heating the battery cell through a medium within the flow channel. According to the above technical solution, the two thermal management plates are attached to the top end and bottom end of the battery cell respectively. These thermal management plates are provided with flow channels and cool or heat the battery cell through the medium within the flow channels, and these flow channels do not occupy a battery cell area, thereby increasing a battery capacity of the battery pack; and there is no need to provide joints between water pipes, thereby reducing a risk of medium leakage.

## Description

The present application claims priority to the Chinese Patent Application No. 202311872799.9, filed with China National Intellectual Property Administration on December 29, 2023, entitled "Battery Pack Thermal Management Device, Battery Pack, and Vehicle". The aforementioned patent application is hereby incorporated by reference in its entirety.

### TECHNICAL FIELD

The present application relates to the technical field of batteries, and in particular, to a battery pack thermal management device, a battery pack, and a vehicle.

### BACKGROUND

With the rapid development of the new energy electric vehicle industry, a driving range of electric vehicles is getting longer and longer and a charging time is becoming shorter and shorter. This leads to larger battery capacity and faster charging speed of the battery pack in the electric vehicles, placing higher demands on battery pack thermal management.

A battery pack thermal management device includes a housing, and a cooling plate and water pipes provided within the housing. The water pipes are provided in a battery cell area and a bottom cooling plate area, and the flow of a medium in the water pipes carries away heat generated by the battery cell or heats the battery cell.

However, in the aforementioned battery pack thermal management device, the battery capacity of the battery pack is limited, and the medium is prone to leaking into the battery cell.

### SUMMARY

The present invention provides a battery pack thermal management device, a battery pack, and a vehicle, for addressing the problems of limited battery capacity of battery pack and easy leakage of medium into the battery cell in the related art.

In a first aspect, the present invention provides a battery pack thermal management device, including a housing, where the housing includes at least two thermal management plates and a frame, one of the at least two thermal management plates is located above the frame and is connected to the frame, and the other is located below the frame and is connected to the frame. An accommodating cavity is enclosed by an inner wall of the frame and the thermal management plates located at two ends of the frame, the accommodating cavity is configured to accommodate a battery cell, and the thermal management plates located at the two ends of the frame are attached to two ends of the battery cell, respectively. Each thermal management plate is provided with a flow channel internally, and the thermal management plates cool or heat the battery cell by means of a medium within the flow channel.

In the battery pack thermal management device provided by the embodiments of the present application, the thermal management plates located at two ends of the frame are attached to two ends of the battery cell respectively, so that they can exchange heat with the battery cell by attachment to the two ends of the battery cell, including cooling and heating the battery cell. By providing flow channels within the thermal management plates, the thermal management plates cool or heat the battery cell through a medium within the flow channel, thereby preventing the flow channels from occupying a space of the battery cell. The thermal management plates exchange heat with the battery cell through the medium within the flow channels, thus cooling or heating the battery cell, and thereby achieving thermal management of the battery pack. This avoids the small capacity of the battery pack due to occupation of the battery cell space by arranging water pipes in the battery cell area, and prevents the accidental occurrence of medium flowing into the battery cell due to water pipes rupture during vehicle collision.

In one possible implementation, the battery pack thermal management device further includes a converter, where the thermal management plates are each configured with a cooling mode and a heating mode. The converter is configured to switch between the cooling mode and the heating mode by controlling a flow direction of the medium within the flow channels.

The converter controls the flow direction of the medium within the flow channel to switch between the cooling mode and heating mode. This enables the temperature of the battery cell to be lowered and raised, and ensures that the temperature distribution in various areas of the battery cell is uniform, avoiding excessive temperature difference in the battery cell.

In one possible implementation, the flow channel includes at least two sub-flow channels, where flow directions of medium within at least two sub-flow channels are opposite.

By providing at least two sub-flow channels, it is possible to ensure a uniform temperature distribution across all areas of the battery cell, thereby achieving a better thermal management of the battery cell.

In one possible implementation, each sub-flow channel includes a first port, a second port, an inner flow channel, an outer flow channel, and an end flow channel. One of the first port and the second port is configured to feed the medium into the sub-flow channel, and the other is configured to discharge the medium from the sub-flow channel. Each inner flow channel is located in a middle of the thermal management plate, and each outer flow channel is located at an edge of the thermal management plate. The first port communicates with a first end of the inner flow channel, a second end of the inner flow channel communicates with a first end of the end flow channel, a second end of the end flow channel communicates with a first end of the outer flow channel, and a second end of the outer flow channel communicates with the second port.

By allowing the medium to flow through the inner flow channel and then into the outer flow channel in the cooling mode, and allowing the medium to flow through the outer flow channel and then flow into the inner flow channel in the heating mode, an excessive temperature difference of the battery cell may be avoided, thereby protecting the battery cell.

In one possible implementation, each sub-flow channel further includes a connecting flow channel, where the second port is located near the first port. A first end of the connecting flow channel communicates with the outer flow channel, and a second end of the connecting flow channel communicates with the second port.

By providing the connecting flow channel, when the thermal management plate is in the cooling mode, the medium may flow through the outside of the battery cell after taking away heat from the middle of the battery cell. While the outside of the battery cell is cooled, some of the heat carried by the medium is dissipated outward, lowering the temperature of the medium, and then the cooled medium flows into the connecting flow channel, which may make the cooling effect better.

In one possible implementation, each inner flow channel and each outer flow channel both include a plurality of parallel flow channels.

By configuring the inner flow channel and each outer flow channel to include a plurality of parallel flow channels, heat exchange is more sufficient, resulting in more effective cooling or heating.

In one possible implementation, each inner flow channel and each outer flow channel both include four parallel flow channels.

By configuring each inner flow channel and each outer flow channel to include four parallel flow channels, it is possible to reduce the requirements for the power source that drives the medium flow while maintaining heat exchange efficiency, thereby reducing costs.

In one possible implementation, when the thermal management plate is in the cooling mode, the first port serves as an inlet and the second port serves as an outlet. When the thermal management plate is in the heating mode, the first port serves as the outlet, and the second port serves as the inlet.

When the thermal management plate is in the cooling mode, the first port serves as an inlet and the second port serves as an outlet; and when the thermal management plate is in the heating mode, the first port serves as the outlet, and the second port serves as the inlet. This facilitates smoother switching between the heating mode and the cooling mode. Moreover, in the cooling mode, the medium flows through the inner flow channel and then into the outer flow channel; and in the heating mode, the medium flows through the outer flow channel and then into the inner flow channel, which realizes uniform temperature distribution across the battery cell and prevents excessive temperature difference across the battery cell.

In one possible implementation, the thermal management plates located at the two ends of the frame are attached to the two ends of the battery cell via thermally conductive structural adhesive.

This configuration may enhance the heat exchange efficiency between the thermal management plate and the battery cell.

In one possible implementation, the thermal management plate is an aluminum profile plate, which is provided with a plurality of cavities internally, and flow channels are formed by arranging a partition plate between the cavities; or, the thermal management plate is manufactured using a punching process.

By configuring the thermal management plate as the aluminum profile plate, manufacturing complexity may be reduced, thereby reducing costs. Additionally, aluminum material has strong resistance to surface oxidation and good corrosion resistance, which can extend the service life of the thermal management plate. Manufacturing the thermal management plate with a punching process can further simplify the manufacturing process, thereby reducing costs and enhancing product strength.

In a second aspect, the present invention provides a battery pack, including a battery cell and the battery pack thermal management device as described in any one of the above, where the battery cell is located within the accommodating cavity in the battery pack thermal management device, and the top end and bottom end of the battery cell are attached to the thermal management plates located at two ends of the frame in the battery pack thermal management device, respectively.

By providing the aforementioned battery pack thermal management device within the battery pack, the accommodating cavity area for holding the battery cell within the battery pack may not be occupied by the flow channels, thereby increasing an overall battery capacity of the battery pack. Moreover, an upper cover and the thermal management plate are integrated together, and a lower cover and the thermal management plate are integrated together, reducing a weight of the battery pack. Side walls of the flow channel in the thermal management enhance an overall structural strength of the battery pack. In addition, there is no need to install water pipes or other conduits, as well as the joints for connecting water pipes or other conduits, further saving costs.

In a third aspect, the present invention provides a vehicle, including a vehicle body and the battery pack thermal management device as described any one of the first aspect.

In the vehicle described in the embodiments of the present application, the battery pack thermal management device described in the first aspect is provided. Since the battery pack thermal management device provides flow channels within the thermal management plate, the thermal management plate achieves the cooling or heating of the battery cell by means of the medium within these flow channels, preventing the flow channels from occupying the space of the battery cell. In other words, more battery cells may be provided within the same space, thereby increasing the capacity of battery pack, extending the driving range of the vehicle, and improving the users' experience. Furthermore, the thermal management plate performs heat exchange with the battery cell through the medium within the flow channels, which cools or heats the battery cell, thereby achieving thermal management of the battery pack. This avoids the small capacity of the battery pack due to occupation of the battery cell space by arranging water pipes in the battery cell area, and prevents the accidental occurrence of medium flowing into the battery cell due to water pipes rupture during vehicle collision, thereby improving a safety factor of the vehicle.

### BRIEF DESCRIPTION OF DRAWINGS

To illustrate the technical solutions of the embodiments of the present invention or the prior art more clearly, a brief introduction to the accompanying drawings required for the description of the embodiments or the prior art is provided below. It is obvious that the accompanying drawings described below represent some embodiments of the present application; and a person skilled in the art may derive other accompanying drawings based on these accompanying drawings without any creative effort.
FIG. 1 is a schematic three-dimensional structural view of a battery pack thermal management device according to an embodiment of the present invention.
FIG. 2 is a schematic exploded structural view of the battery pack thermal management device according to an embodiment of the present invention.
FIG. 3 is a schematic sectional view of a thermal management plate of the battery pack thermal management device under a cooling mode according to an embodiment of the present invention.
FIG. 4 is a schematic sectional view of the thermal management plate of the battery pack thermal management device under a heating mode according to an embodiment of the present invention.

Description of reference signs:
100- housing;
   110- thermal management plate; 110a- upper thermal management plate;
   110b- lower thermal management plate; 111- partition plate;
   120- frame; 121- annular body; 122- cross beam; 123- vertical beam;
   124- first connecting part; 125- second connecting part;
   126- third connecting part; 127- fourth connecting part;
   130- accommodating cavity; 140 -flow channel; 141- sub-flow channel;
   142- first port; 143-second port; 144- inner flow channel;
   145- outer flow channel; 146- end flow channel;
   147- connecting flow channel; 148- parallel flow channel;
200- battery cell;
300- thermally conductive structural adhesive.

### DESCRIPTION OF EMBODIMENTS

The reason for the limited battery capacity of the battery pack is that, in the related art, water pipes or other conduits are arranged in the battery cell area, which occupies a significant amount of space and reduces an arrangement space for the battery cell, limiting an overall battery capacity of the battery pack. The reason why the medium in the battery pack is prone to leakage into the battery cell is that, in the related art, water pipes or other conduits are arranged in the battery cell area and these water pipes or conduits need to be connected to one another via joints, in the event of a vehicle collision, the joints may easily break or the conduits may crack, causing the medium within the water pipes or other conduits to leak into the battery cell and result in a short circuit.

For the above technical problems, the embodiments of the present invention provide a battery pack thermal management device, a battery pack, and a vehicle. A housing includes at least two thermal management plates, and an accommodating cavity for accommodating a battery cell is formed by two thermal management plates located at two ends of the housing with an inner wall of the housing. The two thermal management plates located at two ends of the housing are attached to the top end and the bottom end of the battery cell respectively, the thermal management plate is provided with a flow channel and the battery cell is cooled or heated by the medium within the flow channel. Arranging the flow channel within the thermal management plate avoids the flow channel occupying the battery cell area, resulting in an increased number of battery cell and improved battery capacity of the overall battery pack. Furthermore, the flow channel is arranged within the thermal management plates to cool or heat the battery cell through the medium within the flow channels, and there is no need to provide joints between water pipes or other conduits, thereby reducing the risk of medium leakage and saving costs.

To make the above objectives, features, and advantages of embodiments of the present invention clearer and easier to understand, the following clearly and comprehensively describes the technical solutions in embodiments of the present invention with reference to the accompanying drawings in embodiments of the present invention. Apparently, the described embodiments are merely a part rather than all of the embodiments of the present application. All other embodiments obtained by a person skilled in the art based on embodiments of the present application without creative effort shall fall within the protection scope of the present application.

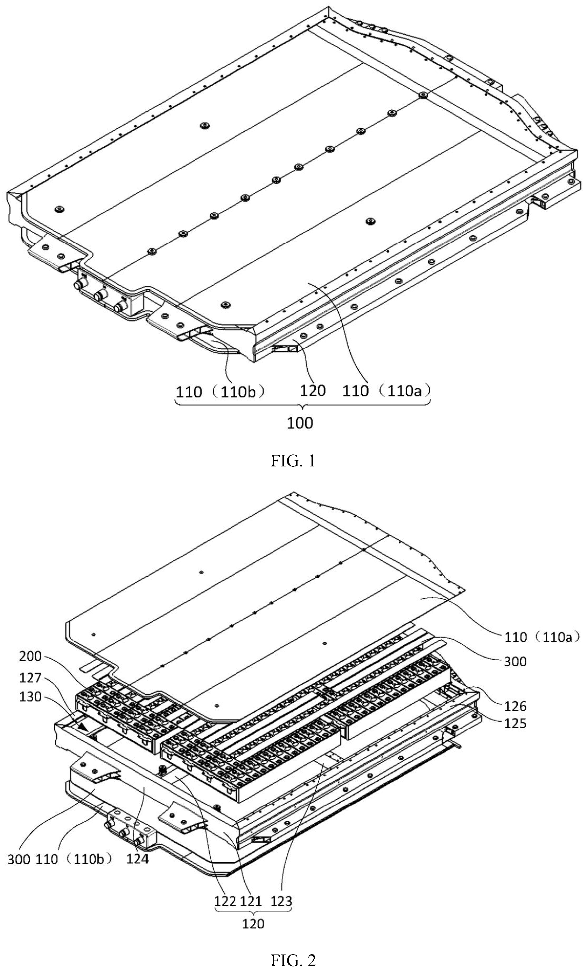

Referring to FIGS. 1 and 2, an embodiment of the present invention provides a battery pack thermal management device including a housing 100. The housing 100 serves as the main structure of the battery pack thermal management device, and is configured to support the battery pack thermal management device and protect the battery cell 200 therein. The housing 100 may be made of materials such as aluminum alloy or stainless steel; and the housing 100 is typically made of aluminum alloy to meet the requirements on strength and weight of the battery pack thermal management device.

The housing 100 includes at least two thermal management plates 110 and a frame 120, and the thermal management plates 110 are used for thermal management of the battery cell 200. The thermal management includes both cooling and heating of the battery cell 200. For example, when the battery pack is in a fast-charging state, the temperature of the battery cell 200 rise rapidly. To prevent damage to the battery cell 200 caused by excessively high temperature, it is necessary to lower the temperature of the battery cell 200, and the thermal management means cooling the battery cell 200. Alternatively, during charging in winter low-temperature condition or other low-temperature scenarios, the battery pack cannot be charged due to excessively low ambient temperature. In this case, the temperature of the battery cell 200 needs to be increased, and the thermal management means heating the battery cell 200.

At least two thermal management plates 110 means that the thermal management plates 110 within the housing 100 may be two, three, or more in number. For ease of description, the following description is given by taking a housing 100 having two thermal management plates 110 as an example with reference to FIG. 1 and FIG. 2. The thermal management plate 110 located above the frame 120 is defined as an upper thermal management plate 110a, and the thermal management plate 110 located below the frame 120 is defined as a lower thermal management plate 110b. As shown in FIG. 1, the upper thermal management plate 110a is located above the frame 120 and is connected to the frame 120; for example, the upper thermal management plate 110a is threadedly connected to the frame 120. The upper thermal management plate 110a serves as an upper cover of the housing 100. While performing thermal management on the battery cell 200, it improves the overall strength of the battery pack thermal management device and protects the battery cell 200. The lower thermal management plate 110b is located below the frame 120 and is connected to the frame 120; for example, the lower thermal management plate 110b is threadedly connected to the frame 120. The lower thermal management plate 110b serves as a lower cover of the housing 100. While performing thermal management on the battery cell 200, it improves the overall strength of the battery pack thermal management device and protects the battery cell 200.

The frame 120 serves as the main structure of the housing 100, and is configured to connect the upper thermal management plate 110a and the lower thermal management plate 110b. As shown in FIG. 1, the frame 120 may include an annular body 121, a cross beam 122, and a vertical beam 123. The annular body 121 includes a first connecting part 124, a second connecting part 125, a third connecting part 126, and a fourth connecting part 127, that are connected end-to-end in sequence. The first connecting part 124 is provided opposite to the third connecting part 126, and the second connecting part 125 is provided opposite to the fourth connecting part 127. Two ends of the cross beam 122 are connected to the middle of the first connecting part 124 and the middle of the third connecting part 126, respectively. Two ends of the vertical beam 123 are connected to the middle of the second connecting part 125 and the middle of the fourth connecting part 127 respectively. Each of the cross beam 122 and the vertical beam 123 is provided with threaded holes for connecting the upper thermal management plate 110a and the lower thermal management plate 110b. The cross beam 122 and the vertical beam 123 are provided to enhance the structural strength of the frame 120 and the housing 100.

An accommodating cavity 130 is enclosed by the inner wall of the frame 120, the upper thermal management plate 110a, and the lower thermal management plate 110b. The accommodating cavity 130 has a hollow structure configured to accommodate the battery cell. The space within the accommodating cavity 130 serves as an area for placing the battery cell 200; the upper thermal management plate 110a is attached to the top end of the battery cell 200, and the lower thermal management plate 110b is attached to the bottom end of the battery cell 200. It should be noted that "attachment" may refer to direct contact and attachment between the two components, or indirect contact and attachment by means of adhesive, tape or the like.

It should be noted that when there are more than two thermal management plates 110, the thermal management plates 110 may be attached to the side of the battery cell 200.

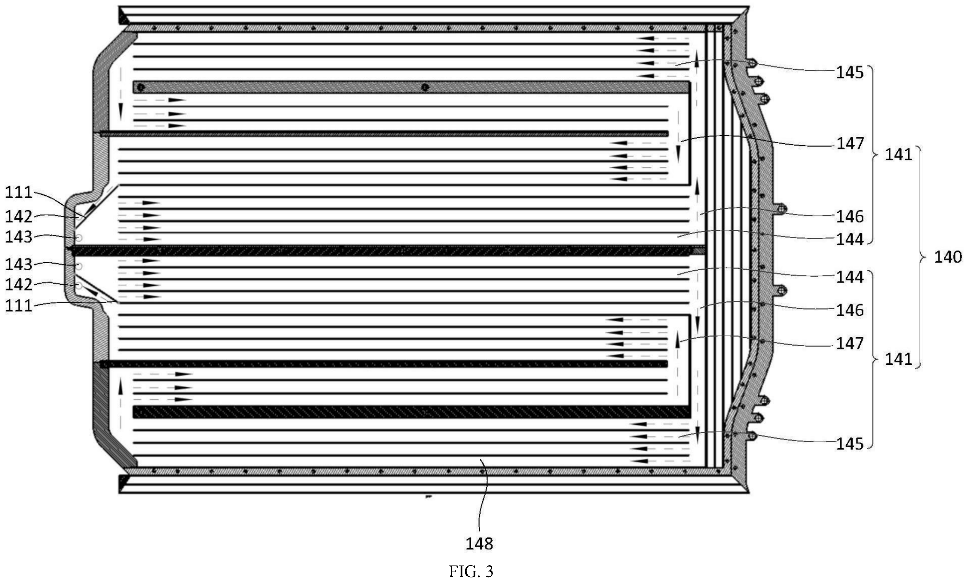

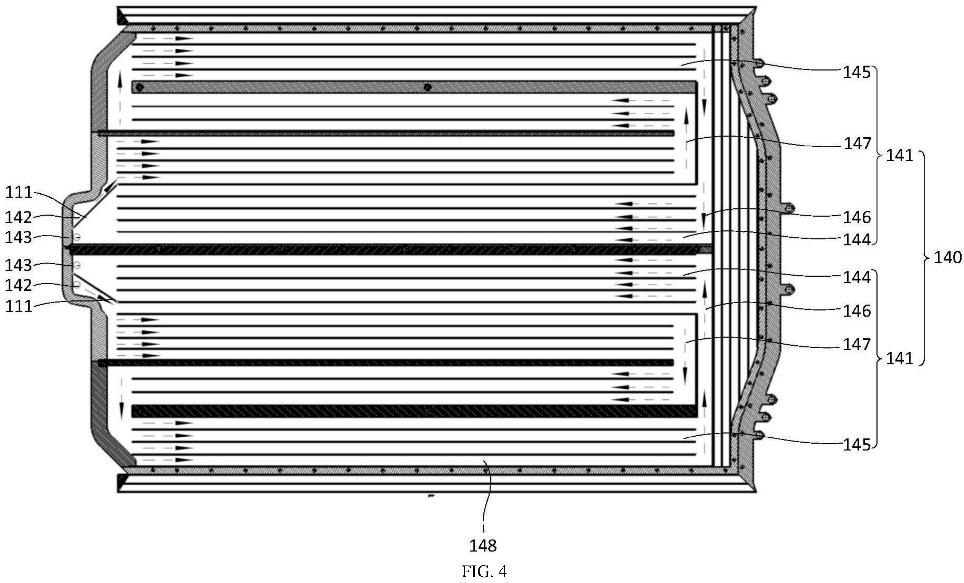

As shown in FIGS. 3 and 4, each thermal management plate 110 is provided with a flow channel 140 where the medium flows. The medium is configured to cool or heat the battery cell 200 and may include water, ethylene glycol, oil, air, or the like. Heat exchange between the medium and the battery cell 200 is realized as the medium flows in the flow channel 140, so as to cool or heat the battery cell 200.

The present application provides a battery pack thermal management device. The accommodating cavity 130 for accommodating the battery cell 200 is enclosed by the inner wall of the frame 120, the upper thermal management plate 110a, and the lower thermal management plate 110b, where the upper thermal management plate 110a and the lower thermal management plate 110b are attached to the top end and the bottom end of the battery cell 200 respectively, and the upper thermal management plate 110a and the lower thermal management plate 110b are each provided with a flow channel 140 therein. The medium flowing within the flow channel 140 performs heat exchange with the top end and bottom end of the battery cell 200, so as to cool or heat the battery cell 200. Since the upper thermal management plate 110a and the lower thermal management plate 110b serve as the upper cover and the lower cover of the housing 100, respectively; and the flow channels 140 are provided in the upper cover and lower cover instead of arranging water pipes or other conduits within the accommodation cavity 130, thereby reducing an overall weight of the battery pack thermal management device, expanding a space for arranging the battery cell 200, and further increasing the overall battery capacity of the battery pack. In addition, there is no need to provide joints for connecting water pipes or other conduits, thereby reducing the risk of medium leakage.

In some embodiments, the battery pack thermal management device further includes a converter configured to switch the operating mode of the thermal management plates 110. The thermal management plates are each configured with a cooling mode and a heating mode, where the cooling mode is used to cool the battery cell 200. For example, when the battery cell 200 is in a fast-charging state and the temperature of the battery cells 200 rise rapidly, at this point, the converter switches the thermal management plate 110 to the cooling mode. In the cooling mode, the medium enters from the middle of the flow channel 140 of the thermal management plate 110 and flows toward an exterior of the flow channel 140. Since the heat in the middle of the battery cell 200 is greater than that in the exterior of the battery cell 200, the medium entering from the middle of the flow channel 140 rapidly carries away the heat from the middle of the battery cell 200, which causes the temperature in the middle of the battery cell 200 to drop rapidly, thereby balancing the temperature across various regions of the battery cell 200 and preventing excessive temperature difference across the battery cell 200.

Heating mode is used to heat the battery cell 200. For example, when the battery cell 200 is charged in a low-temperature environment such as winter or other cold scenarios, the charging speed is slow due to the low ambient temperature. Alternatively, when the vehicle is in a low-temperature environment such as winter or other cold scenarios, the discharge rate of the battery cell 200 is low, making it difficult for the vehicle to accelerate. Thus, it is required for the converter to switch the thermal management plate 110 to the heating mode. In heating mode, after the medium enters from the exterior of the flow channel 140 in the thermal management plate 110, it flows toward the middle of the flow channel 140. Since the heat in the exterior of the battery cell 200 is less than that in the middle of the battery cell 200, the medium entering from the exterior of the flow channel 140 increases the heat in the exterior of the battery cell 200, causing the temperature in the exterior of the battery cell 200 to rise rapidly, thereby balancing the temperature across various regions of the battery cell 200 and preventing excessive temperature difference across the battery cell 200.

The converter is configured to switch between the cooling mode and the heating mode by controlling the flow direction of the medium within flow channel 140. Specifically, in the cooling mode, the medium enters from the middle of flow channel 140 and flows toward the exterior of flow channel 140. In the heating mode, the medium enters from the exterior of flow channel 140 and flows toward the middle of flow channel 140, thereby preventing excessive temperature difference caused by uneven temperature distribution across various regions of battery cell 200.

Referring to FIGS. 3 and 4, in some embodiments, the flow channel 140 includes at least two sub-flow channels 141, and the flow directions of the medium within the at least two sub-flow channels 141 are opposite. For example, as shown in FIGS. 3 and 4, there are two sub-flow channels 141, where a first sub-flow channel 141 is located at the rear of the thermal management plate 110, and a second sub-flow channel 141 is located at the front of the thermal management plate 110. As shown in FIG. 3, when the thermal management plate 110 is in the cooling mode, the flow direction of the medium within the first sub-flow channel 141 refers to entering from the middle of the thermal management plate 110 and flowing toward the rear of the thermal management plate 110; and the flow direction of the medium within the second sub-flow channel 141 refers to entering from the middle of the second sub-flow channel 141 and flowing toward the front of the thermal management plate 110, thereby achieving uniform temperature distribution across various regions of the battery cell 200 in the cooling mode and preventing excessive temperature difference.

As shown in FIG. 4, when the thermal management plate 110 is in the heating mode, the flow direction of the medium within the first sub-flow channel 141 refers to entering from the rear of the thermal management plate 110 and flowing toward the middle of the thermal management plate 110; and the flow direction of the medium within the second sub-flow channel 141 refers to entering from the front of the second sub-flow channel 141 and flowing toward the middle of the thermal management plate 110, thereby ensuring uniform temperature distribution across various regions of the battery cell 200 under the heating mode and preventing excessive temperature difference.

Referring to FIGS. 3 and 4, in some embodiments, each sub-flow channel 141 includes a first port 142, a second port 143, an inner flow channel 144, an outer flow channel 145, and an end flow channel 146. One of the first port 142 and the second port 143 is configured to feed the medium into the sub-flow channel 141, while the other is configured to discharge the medium from the sub-flow channel 141. For example, when the thermal management plate 110 is in the cooling mode, the first port 142 is configured to feed the medium into the sub-flow channel 141, and the second port 143 is configured to discharge the medium from the sub-flow channel 141. When the thermal management plate 110 is in the heating mode, the second port 143 is configured to feed the medium into the sub-flow channel 141, and the first port 142 is configured to discharge the medium from the sub-flow channel 141.

As shown in FIGS. 3 and 4, each inner flow channel 144 is located in the middle of the thermal management plate 110, and each outer flow channel is located at the edge of the thermal management plate 110. Taking two sub-flow channels 141 as an example, the inner flow channels 144 in the first sub-flow channel 141 and the second sub-flow channel 141 are both located in the middle of the thermal management plate 110, the outer flow channel 145 in the first sub-flow channel 141 is located at the rear of the thermal management plate 110, and the outer flow channel 145 in the second sub-flow channel 141 is located at the front of the thermal management plate 110.

The first port 142 communicates with the first end of the inner flow channel 144; the second end of the inner flow channel 144 communicates with the first end of the end flow channel 146; the second end of the end flow channel 146 communicates with the first end of the outer flow channel 145; and the second end of the outer flow channel 145 communicates with the second port. As shown in FIG. 3, when the thermal management plate 110 is in the cooling mode, the medium enters the inner flow channel 144 through the first port 142, then flows sequentially through the end flow channel 146 and the outer flow channel 145, and finally discharges from the second port 143. This causes the medium to flow through the inner flow channel 144 first, then through the outer flow channel 145, thereby lowering the internal temperature of the battery cell 200 first and preventing excessive temperature difference across the battery cell 200.

As shown in FIG. 4, when the thermal management plate 110 is in theheating mode, the medium flows into the outer flow channel 145 through the second port 143, then passes through the end flow channel 146 and the inner flow channel 144 sequentially, and finally discharges from the first port 142. This causes the medium to flow through the outer flow channel 145 first, then through the inner flow channel 144, thereby lowering the external temperature of the battery cell 200 first and preventing excessive temperature difference across the battery cell 200.

Referring to FIGS. 3 and 4, in some embodiments, each sub-flow channel 141 further includes a connecting flow channel 147. The first end of the connecting flow channel 147 communicates with the outer flow channel 145, and the second end of the connecting flow channel 147 communicates with the second port 143. The connecting flow channel 147 is located between the outer flow channel 145 and the inner flow channel 144. The medium flows out from the outer flow channel. With this configuration, when the thermal management plate 110 is in the cooling mode, the medium flows from the first port 142 into the inner flow channel 144, then through the end flow channel 146, the outer flow channel 145, and the connecting flow channel 147 sequentially, and finally discharges from the second port 143. After carrying away heat from the middle of the battery cell 200, the medium flows through the exterior of the battery cell 200. While the exterior of the battery cell 200 is cooled, part of heat carried by the medium is dissipated outward, causing the temperature of the medium to decrease. The cooled medium then flows into the connecting flow channel 147, resulting in improved cooling performance and a more uniform temperature distribution across various regions of the battery cell.

Referring to FIGS. 3 and 4, in some embodiments, each of the inner flow channel 144 and outer flow channel 145 includes a plurality of parallel flow channels 148. The parallel flow channels 148 are divided by partition plates to increase heat exchange efficiency. Each of inner flow channel 144 and outer flow channel 145 may include four parallel flow channels 148. If the number of parallel flow channels 148 is too small, the efficiency of heat exchange between the medium and the battery cell 200 is low, resulting in increased temperature difference across the battery cell 200. If the number of parallel flow channels 148 is too large, the requirements for the power source that drives the medium flow, such as a water pump, will be too high, thereby increasing costs.

In the above embodiments, when the thermal management plate 110 is in the cooling mode, the first port 142 serves as an inlet, through which the medium enters the sub-flow channel 141, and the second port 143 serves as an outlet, through which the medium discharges from the sub-flow channel 141. When the thermal management plate 110 is in the heating mode, the first port 142 serves as the outlet, through which the medium discharges from the sub-flow channel 141, and the second port 143 serves as the inlet, through which the medium enters the sub-flow channel 141.

Referring to FIG. 2, in some embodiments, the thermal management plates 110 located at two ends of the frame 120 are attached to two ends of the battery cell 200 respectively via thermally conductive structural adhesive 300. The thermal management plates 110 located at two ends of the frame 120 are an upper thermal management plate 110a and a lower thermal management plate 110b, respectively. The upper thermal management plate 110a is bonded to the top end of the battery cell 200 via the thermally conductive structural adhesive 300, achieving attachment with the top end of the battery cell 200. The lower thermal management plate 110b is bonded to the bottom end of the battery cell 200 via the thermally conductive structural adhesive 300, achieving attachment with the bottom end of the battery cell 200. This achieves better heat exchange.

In some embodiments, the thermal management plate 110 is an aluminum profile plate. As shown in FIGS. 3 and 4, the aluminum profile plate is provided with a plurality of cavities internally for medium flow. Partition plates 111 are arranged between the cavities, forming the flow channel 140. Since the aluminum profile plate is made of a 6000-seires aluminum alloy, it offers lower cost and higher strength compared to fabricating the thermal management plate 110 and flow channel 140 by stamping aluminum sheet metal.

The present application further provides a battery pack including the battery cell 200 and the battery pack thermal management device as described in any one of the above. Referring to FIGS. 1 and 2, the battery cell 200 is located within the accommodating cavity 130, and the top end and bottom end of the battery cell 200 are attached to the thermal management plates 110 located at two ends of the frame 120, respectively. In the battery pack provided by the present application, the area for the accommodating cavity 130 where the battery cell 200 is arranged is not occupied by the flow channel 140, thereby increasing the overall battery capacity of the battery pack. Moreover, the upper cover of the housing and the upper thermal management plate 110a are integrated together, and the lower cover of the housing and the lower thermal management plate are integrated together, reducing the types of the battery pack. Side walls of the flow channel in the thermal management enhance an overall structural strength of the battery pack. In addition, there is no need to install water pipes or other conduits, as well as the joints for connecting water pipes or other conduits, further saving costs.

The present application further provides a vehicle, which may include a vehicle body and the battery pack thermal management device as described in any one of the above embodiments.

Alternatively, the present application further provides a vehicle, which includes a vehicle body and the above battery pack. The battery pack may include the battery pack thermal management device as described in any one of the above embodiments.

In the vehicle described in the embodiments of the present application, the battery pack thermal management device described above is provided. Since the battery pack thermal management device provides flow channels within the thermal management plate, the thermal management plate achieves the cooling or heating of the battery cell by means of the medium within these flow channels, preventing the flow channels from occupying the space of the battery cell. In other words, more battery cells may be provided within the same space. When the vehicle is provided with this battery pack thermal management device, the capacity of battery pack can be increased, extending the driving range of the vehicle, and improving the users' experience. Furthermore, the thermal management plate performs heat exchange with the battery cell through the medium within the flow channels, which cools or heats the battery cell, thereby achieving thermal management of the battery pack. This avoids the small capacity of the battery pack due to occupation of the battery cell space by arranging water pipes in the battery cell area, and prevents the accidental occurrence of medium flowing into the battery cell due to water pipes rupture during vehicle collision, thereby improving a safety factor of the vehicle.

The various embodiments or implementations described in the present specification are presented in a progressive manner. Each embodiment highlights the differences from other embodiments, and the same or similar parts among various embodiments may be mutually referenced.

It should be noted that terms such as "in specific implementation", "in some embodiments", "in the present embodiment", and "exemplarily" used in the specification indicate that the described embodiments may include specific feature, structure or characteristic, but not every embodiment necessarily includes such specific feature, structure or characteristic. Furthermore, such phrases do not necessarily refer to the same embodiment. Furthermore, when describing specific feature, structure, or characteristic in combination with an embodiment, it is within the knowledge of those skilled in the art to implement such feature, structure, or characteristic in combination with other embodiments, whether explicitly or implicitly described.

Generally, terms should be understood at least in part based on their contextual usage. For example, depending at least partially on the context, the term "one or more" used herein may be used to describe any feature, structure or characteristic in the singular sense, or a combination of features, structures or characteristics in the plural sense. Similarly, terms such as "a/an" or "the" may also be construed as conveying singular or plural usage, depending at least partially on the context.

It should be readily understood that the terms "on", "above" and "over" in the present disclosure should be interpreted in the broadest sense, such that "on" means not only "directly on something", but also includes the meaning of "on something" with an intermediate feature or layer in between; and "above" or "over" includes not only the meaning of "above or over something", but also the meaning of "above or over something" with no intermediate feature or layer in between (i.e., directly on something).

Furthermore, for the sake of explanation, spatial relative terms such as "below", "beneath", "under", "above" and "over" may be used herein to describe the relationship of one element or feature relative to other elements or features as illustrated in the drawings. Spatial relative terms are intended to encompass different orientations of the device during use or operation other than the orientations shown in the accompanying drawings. The device may adopt other orientations (rotated by 90 degrees or in other orientations), and the spatial relative descriptors used herein shall be interpreted accordingly.

Finally, it should be noted that the above embodiments are provided merely to illustrate the technical solutions of the present application and are not intended to limit them. Although the present application has been described in detail with reference to the aforementioned embodiments, those skilled in the art should understand that: they can still modify the technical solutions recorded in the foregoing embodiments, or make equivalent substitutions for some or all of the technical features therein; and these modifications or substitutions do not cause the essence of the corresponding technical solutions to depart from the scope of the technical solutions of embodiments of the present application.

## Claims

1. A battery pack thermal management device, comprising:
a housing, wherein the housing comprises at least two thermal management plates and a frame, one of the at least two thermal management plates is located above the frame and is connected to the frame, and the other is located below the frame and is connected to the frame;
an accommodating cavity is enclosed by an inner wall of the frame and the thermal management plates located at two ends of the frame, the accommodating cavity is configured to accommodate a battery cell, and the thermal management plates located at the two ends of the frame are attached to two ends of the battery cell, respectively;
each thermal management plate is provided with a flow channel internally, and the thermal management plates cool or heat the battery cell by means of a medium within the flow channel.

2. The battery pack thermal management device according to claim 1, wherein the battery pack thermal management device further comprises a converter, and the thermal management plates are each configured with a cooling mode and a heating mode;
the converter is configured to switch between the cooling mode and the heating mode by controlling a flow direction of the medium within the flow channel.

3. The battery pack thermal management device according to claim 1, wherein the flow channel comprises at least two sub-flow channels, flow directions of the medium within the at least two sub-flow channels are opposite.

4. The battery pack thermal management device according to claim 3, wherein each sub-flow channel comprises a first port, a second port, an inner flow channel, an outer flow channel, and an end flow channel;
one of the first port and the second port is configured to feed the medium into the sub-flow channel, and the other is configured to discharge the medium from the sub-flow channel;
each inner flow channel is located in a middle of the each thermal management plate, and each outer flow channel is located at an edge of the each thermal management plate;
the first port communicates with a first end of the inner flow channel, a second end of the inner flow channel communicates with a first end of the end flow channel, a second end of the end flow channel communicates with a first end of the outer flow channel, and a second end of the outer flow channel communicates with the second port.

5. The battery pack thermal management device according to claim 4, wherein the each sub-flow channel further comprises a connecting flow channel, and the second port is located near the first port;
a first end of the connecting flow channel communicates with the outer flow channel, and a second end of the connecting flow channel communicates with the second port.

6. The battery pack thermal management device according to claim 5, wherein the each inner flow channel and the each outer flow channel both comprise a plurality of parallel flow channels.

7. The battery pack thermal management device according to claim 6, wherein the each inner flow channels and the each outer flow channel both comprise four parallel flow channels.

8. The battery pack thermal management device according to any one of claims 4 to 7, wherein when the thermal management plate is in a cooling mode, the first port serves as an inlet and the second port serves as an outlet;
when the thermal management plate is in a heating mode, the first port serves as the outlet, and the second port serves as the inlet.

9. The battery pack thermal management device according to any one of claims 1 to 7, wherein the thermal management plates located at the two ends of the frame are respectively attached to the two ends of the battery cell via thermally conductive structural adhesive.

10. The battery pack thermal management device according to any one of claims 1 to 7, wherein the each thermal management plate is an aluminum profile plate, the aluminum profile plate is provided with a plurality of cavities internally, and flow channels are formed by arranging a partition plate between the cavities;
or, the each thermal management plate is manufactured using a punching process.

11. A battery pack, comprising a battery cell and the battery pack thermal management device according to any one of claims 1 to 10, wherein the battery cell is located within the accommodating cavity in the battery pack thermal management device, and the top end and the bottom end of the battery cell are attached to the thermal management plates located at the two ends of the frame in the battery pack thermal management device respectively.

12. A vehicle, comprising a vehicle body and the battery pack thermal management device according to any one of claims 1 to 10.
